# EUROPEAN PATENT SPECIFICATION

(11) **EP 4 335 702 B1**
(45) Date of publication and mention of the grant of the patent: **25.06.2025**
(21) Application number: 23194539.5
(22) Date of filing: 31.08.2023
(51) Int. Cl.: B60R 16/02, H02G 3/04

(54) **PROTECTOR**
SCHÜTZER
PROTECTEUR

(30) Priority: 05.09.2022 JP 2022140442
(43) Date of publication of application: 13.03.2024
(73) Proprietor: Yazaki Corporation, Tokyo, 108-0075 (JP)
(72) Inventor: Hara, Motoya, Toyota-shi, Aichi-ken, 471-8571 (JP); Ishikawa, Tatsuya, Toyota-shi, Aichi-ken, 471-8571 (JP); Kashino, Yuichi, Toyota-shi, Aichi-ken, 471-8571 (JP); Murao, Yasuaki, Toyota-shi, Aichi, 470-1294 (JP); Takahashi, Hiroyuki, Toyota-shi, Aichi, 470-1294 (JP); Takahashi, Kazuya, Toyota-shi, Aichi, 470-1294 (JP)
(74) Representative: Grünecker Patent- und Rechtsanwälte PartG mbB

(56) References cited:
- EP-A1- 2 876 762
- KR-A- 20100 002 373
- KR-B1- 101 899 954
- US-A1- 2022 134 976

## Description

### BACKGROUND OF THE INVENTION

### 1. Field of the Invention

The present invention relates to a protector.

### 2. Description of the Related Art

Conventionally, in vehicles such as automobiles, when there is a change in the space between a wire and its peripheral components due to external input applied during traveling, the protection target part of the wire may be covered with a protector in order to prevent interference between the wire and the peripheral components. For example, such a protector is disclosed in Japanese Patent No. 6198183. Such a protector is also disclosed in KR 2010 0002373 A, KR 101 899 954 B1, US 2022/134976 A1 and EP 2 876 762 A1.

By the way, on vehicles, crash tests are conducted in which impact loads are applied from the outside. Among various types of wires installed in vehicles, there are some types that may interfere with peripheral components when impact loads are applied to the car body in crash tests, even though the wires do not interfere with the peripheral components by external input applied during normal traveling. It is desirable for the protector to also have a wire protection function against such impact loads.

### SUMMARY OF THE INVENTION

Therefore, it is an object of the present invention to provide a protector with a wire protection function for the input of impact loads.

In order to achieve the above mentioned object, a protector according to one aspect of the present invention is found in claim 1.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a perspective view illustrating a protector according to an embodiment after being assembled to a car body;
FIG. 2 is a perspective view of the protector according to the embodiment viewed from another angle after being assembled to the car body, which is an enlarged view of a protrusion housing body and surroundings thereof;
FIG. 3 is a sectional view taken along X-X line in FIG. 1;
FIG. 4 is a perspective view of the protector according to the embodiment before being assembled to the car body, which is an enlarged view of the protrusion housing body and surroundings thereof;
FIG. 5 is a plan view of the protrusion housing body according to the embodiment when viewed from a first opening;
FIG. 6 is a perspective view illustrating a protector according to a modification example after being assembled to a car body;
FIG. 7 is a perspective view of the protector according to the modification example viewed from another angle after being assembled to the car body, which is an enlarged view of a protrusion housing body and surroundings thereof;
FIG. 8 is a sectional view taken along Y-Y line in FIG. 6;
FIG. 9 is a plan view of the protrusion housing body according to the modification example when viewed from a first opening;
FIG. 10 is a perspective view illustrating a holding structure of a connector; and
FIG. 11 is a perspective view illustrating the connector.

### DETAILED DESCRIPTION OF THE PREFERRED EMBODIMENTS

Hereinafter, an embodiment of a protector according to the present invention will be described in detail with reference to the accompanying drawings. Note, however, that the present invention is not limited by the embodiment.

### Embodiment

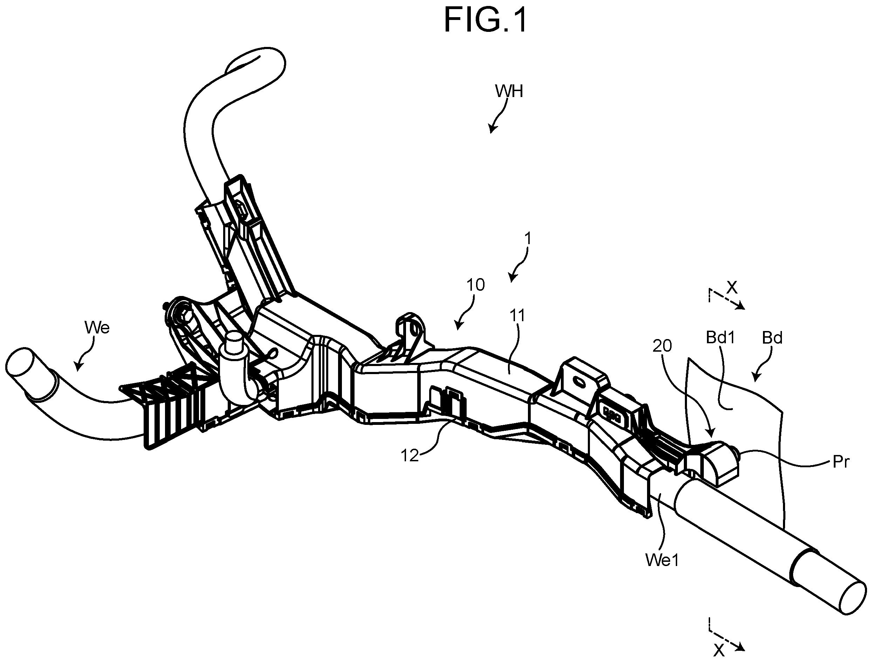

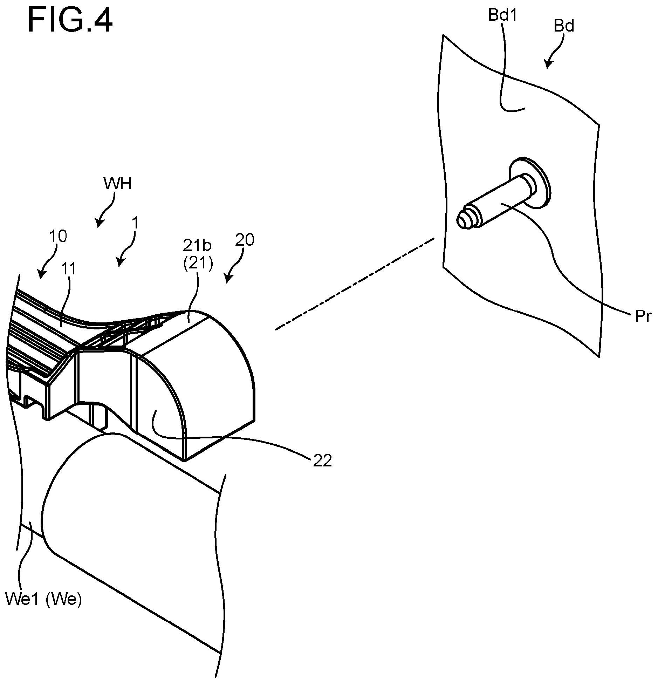

One embodiment of a protector according to the present invention will be described with reference to FIG. 1 to FIG. 5.

Reference sign 1 in FIG. 1 to FIG. 5 indicates the protector of the present embodiment. The protector 1 is a wire protection component for enabling protection of a protection target part We1 by housing the protection target part We1 of a wire (hereinafter, referred to as "protection target wire") We that is a protection target of the protector 1 itself, preventing interference between the protection target part We1 and its peripheral components, and the like. The protection target part We1 is an area where the space with respect to the peripheral component changes due to external input applied during normal traveling, which is a place where interference with the peripheral component is concerned due to the change in the space.

The protector 1 is assembled to the protection target wire We, and configures a wire harness WH together with the protection target wire We (FIG. 1). The wire harness WH is loaded on a vehicle such as an automobile and routed along vehicle structural components (car body structures configuring the car body, components fixed to the body structures, and the like). For example, the wire harness WH illustrated herein is routed in an engine compartment along a wall face Bd1 of a dash panel Bd that is one of the car body structures.

The protector 1 is molded with an insulating material such as a synthetic resin. The protector 1 includes a protector main body 10 in which the protection target part We1 of the protection target wire We is housed (FIG. 1, FIG. 2, FIG. 4, and FIG. 5). The protector main body 10 is the part to be the main body of the protector 1, and protects the protection target part We1 from the peripheral components during normal traveling. Therefore, the protector main body 10 has an internal space for housing and routing the protection target part We1. For example, the protector main body 10 illustrated herein includes: a housing member 11 that houses and routes the protection target part We1 inserted from an insertion port; and a cover member 12 that is assembled to the housing member 11 and closes the insertion port (FIG. 1). The protector main body 10 illustrated herein is, for example, screw-fixed to the wall face Bd1 of the dash panel Bd.

The protector 1 also includes a protrusion housing body 20 that is connected to the protector main body 10 and houses a protrusion Pr from the wall face of the peripheral component disposed in the surroundings of the protector main body 10 (FIG. 1 to FIG. 5). The protrusion housing body 20 prevents the peripheral component disposed in the surroundings of the protrusion Pr from interfering with the protrusion Pr.

In this example, the dash panel Bd exists as a peripheral component in the surroundings of the protector main body 10, and a stud bolt made of metal protrudes from the wall face Bd1 of the dash panel Bd as the protrusion Pr toward the front side of the vehicle within the engine compartment. Thus, the protrusion housing body 20 discussed herein houses the protrusion (stud bolt) Pr therein to prevent interference between the protrusion Pr and the peripheral component of the protrusion Pr.

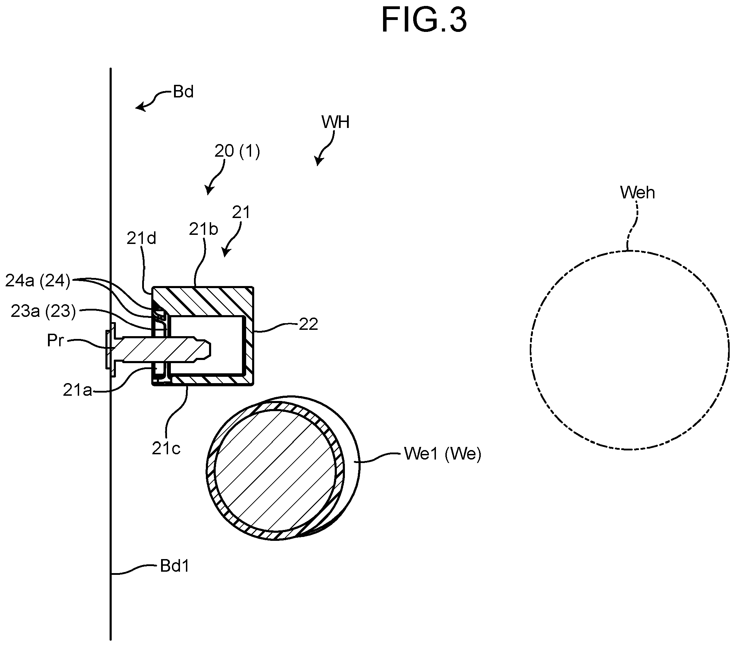

For example, in the engine compartment discussed herein, a high-voltage wire (hereinafter, referred to as "external wire") Weh, which is a different wire from the protection target wire We that carries low-voltage electricity, and which carries higher-voltage electricity compared to the protection target wire We, is routed on the front side of the vehicle with respect to the protrusion (stud bolt) Pr (FIG. 3). In other words, the external wire Weh and the protrusion (stud bolt) Pr are disposed opposing to each other with a space provided therebetween in the front-rear direction of the vehicle. The external wire Weh may be a wire that is concerned about interfering with the protrusion Pr due to changes in the space with respect to the protrusion (stud bolt) Pr caused by external input applied during normal traveling. Furthermore, the external wire Weh may be capable of maintaining the space to be in a size that does not cause interference with the protrusion Pr, even when there is a change in the space with respect to the protrusion (stud bolt) Pr caused due to external input applied during normal traveling.

In the meantime, during a crash test of the vehicle, an impact load greater than external output during normal traveling is applied to the car body. Therefore, when such an impact load is applied to the car body, the change in the space between the components becomes greater than that of normal driving. For example, in a vehicle such as a hybrid vehicle that uses an electric motor as a drive source, during a frontal crash test, the impact load applied to the front side of the vehicle causes the powertrain such as an internal combustion engine and transmission pushed from the car body or the like to move toward the dash panel Bd side, and the external electric wire Weh also moves together with the powertrain toward the dash panel Bd side. Therefore, when that impact load is applied to the car body, the space between the external wire Weh and the protrusion (stud bolt) Pr becomes much narrower than that of normal driving, so that there is a concern about interference caused therebetween. The protrusion housing body 20 discussed herein is provided to protect the external wire Weh from the protrusion (stud bolt) Pr when such an impact load is applied from the front side of the vehicle.

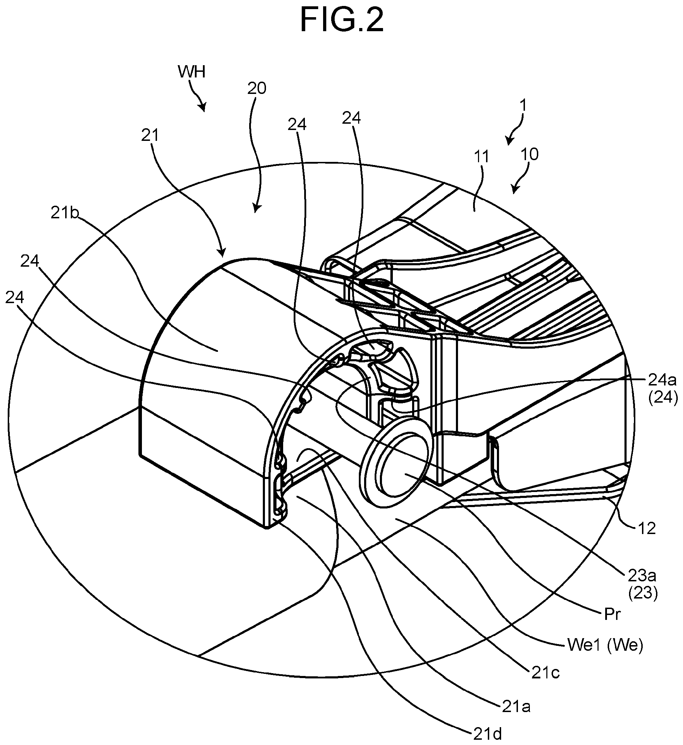

Specifically, the protrusion housing body 20 includes: a first wall body 21 in a cylindrical shape that surrounds the protrusion Pr inserted from a first opening 21a at one end; and a second wall body 22 that closes a second opening at another end of the first wall body 21 (FIG. 2 to FIG. 5). The protrusion housing body 20 discussed herein is disposed such that the cylinder axis direction of the first wall body 21 is aligned with the front-rear direction of the vehicle (in other words, the protruding direction of the protrusion (stud bolt) Pr) and the first opening 21a is facing toward the wall face Bd1 of the dash panel Bd.

The first wall body 21 is formed as a cylindrical body configured with a U-shaped first wall part 21b that is protruding toward the upper side of the vehicle and a flat-plate shaped second wall part 21c that closes the U-shaped opening (FIG. 2, FIG. 3, and FIG. 5).

Furthermore, the protrusion housing body 20 is formed such that the protrusion (stud bolt) Pr does not break through the second wall body 22 even when an annular end face 21d of the first wall body 21 on the first opening 21a side (FIG. 2, FIG. 3, and FIG. 5) and the wall face Bd1 of the dash panel Bd come in contact. Thus, in order to prevent the protrusion (stud bolt) Pr from contacting the second wall body 22, the first wall body 21 is formed as a cylindrical body that is longer in the cylinder axis direction than the maximum protrusion amount of the protrusion (stud bolt) Pr from the wall face of the peripheral component (wall face Bd1 of the dash panel Bd) (FIG. 3).

The second wall body 22 is formed as a flat-plate shaped wall body that closes the second opening at the other end of the first wall body 21. Furthermore, the second wall body 22 is interposed between the external wire Weh and the tip of the protrusion (stud bolt) Pr (FIG. 3). Note that the second wall body 22 may be, for example, formed by locally thinning the thickness of the flat-plate shaped wall body to be away from the tip of the protrusion (stud bolt) Pr, or may be formed as a convex plate part that is bulged outward to be away from the tip of the protrusion (stud bolt) Pr.

As described, even when an impact load is applied from the front side of the vehicle, the protrusion housing body 20 keeps the protrusion (stud bolt) Pr housed therein, and prevents the protrusion (stud bolt) Pr from contacting the external wire Weh. Therefore, the protector 1 according to the present embodiment can have not only the original wire protection function of protecting the protection target part We1 of the protection target wire We with the protector main body 10, but also the wire protection function of protecting the external wire Weh from the protrusion (stud bolts) Pr when an impact load is applied to the vehicle from the outside.

Furthermore, the rigidity of the protrusion housing body 20 according to the present embodiment can be improved by closing the second opening at the other end of the first wall body 21 in a cylindrical shape with the second wall body 22. Therefore, the protrusion housing body 20 can keep its shape and prevent the protrusion (stud bolt) Pr inside thereof from contacting the external wire Weh even when the external wire Weh collides with the protrusion housing body 20 when an impact load is applied to the vehicle from the outside, thereby making it possible to improve the protection function of the external wire Weh. From another viewpoint, if it is possible to provide desired rigidity only with a certain size of the first wall body 21, by providing the second wall body 22 to the first wall body 21 formed in a size smaller than that, the protrusion housing body 20 can reduce the body size and still ensure the protection function of the external wire Weh.

Note here that the second wall body 22 is formed to have lower rigidity than the first wall body 21 and may be bent by the load received from the external wire Weh. The load which the second wall body 22 receives from the external wire Weh is caused by the impact load applied in the crash test of the vehicle (the previous frontal crash test). In the protrusion housing body 20, when an impact load is applied to the vehicle from the outside and the external wire Weh inputs a load to the second wall body 22, the second wall body 22 bends to absorb the input load and reduces the force that is transmitted from the second wall body 22 to the first wall body 21. This allows this protrusion housing body 20 to ease the load received from the external wire Weh caused due to the impact load, so that the protection function of the external wire Weh can be improved.

Even when the second wall body 22 of the protrusion housing body 20 brakes by the load received from the external wire Weh, the first wall body 21 can receive the load. Furthermore, even when the annular end face 21d on the first opening 21a side further comes in contact with the wall face Bd1 of the dash panel Bd, the protrusion housing body 20 does not allow the protrusion (stud bolt) Pr to be pushed out of the second opening of the first wall body 21 due to the length of the first wall body 21 in the cylinder axis direction. Therefore, the protrusion housing body 20 can maintain the protection function of the external wire Weh even if something happens.

For example, in the protrusion housing body 20, by making the thickness of the second wall body 22 thinner than that of the first wall body 21, the rigidity of the second wall body 22 is lowered compared to that of the first wall body 21 such that the second wall body 22 is easily bent by the load from the external wire Weh. The protrusion housing body 20 may be formed in this manner to have a difference in the rigidly between the second wall body 22 and the other parts, or the difference in the rigidity may be generated as in the following example.

The protrusion housing body 20 discussed herein includes: a third wall body 23 that is disposed on an inner side the first wall body 21 with its outer peripheral face opposing, with a space, to the inner peripheral face of the first wall body 21, and surrounds the protrusion Pr inserted from the first opening 21a of the first wall body 21; and a plurality of connecting wall bodies 24 that are arranged around the axis of the cylinder of the first wall body 21 for connecting the inner peripheral face of the first wall body 21 and the outer peripheral face of the third wall body 23 (FIG. 2, FIG. 3, and FIG. 5).

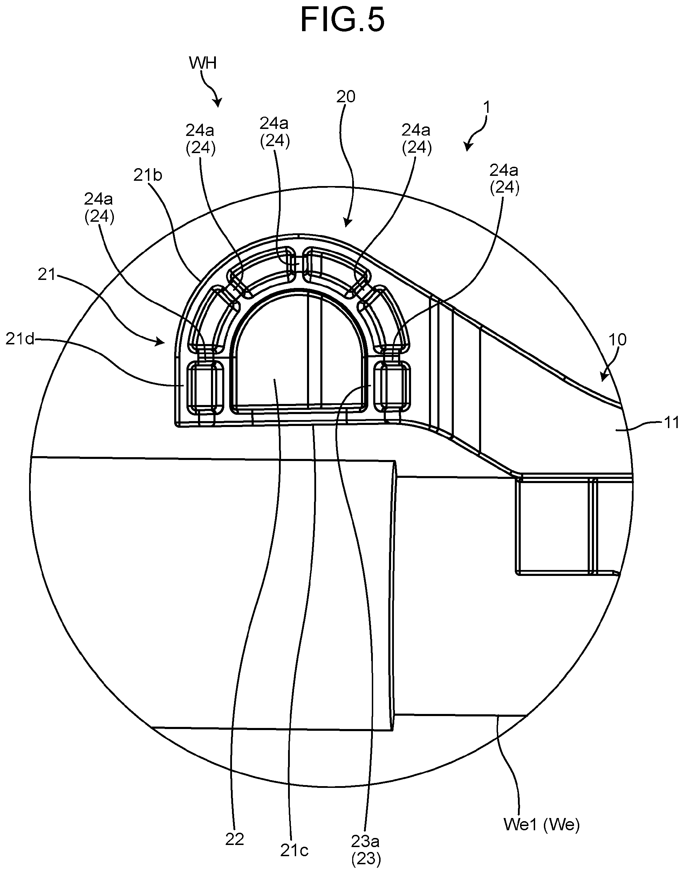

The third wall body 23 discussed herein is formed as a U-shaped wall body similar to the first wall part 21b of the first wall body 21, with two end parts on the opening side of the U shape connected to the second wall part 21c of the first wall body 21 (FIG. 2 and FIG. 5). Furthermore, the opening of the third wall body 23 on the second wall body 22 side is closed by the second wall body 22.

The connecting wall body 24 discussed herein is formed to extend from the end part of the third wall body 23 on the first opening 21a side to the second wall body 22, and is connected also to the second wall body 22 (FIG. 3).

Although not illustrated in the drawings, the third wall body 23 may be formed as a cylindrical body similar to and coaxial with the first wall body 21. In other words, the protrusion housing body 20 may employ a double-walled structure with the first wall body 21 in a cylindrical shape and the third wall body 23 in a cylindrical shape.

The second wall body 22 in the protrusion housing body 20 is desirable to be formed to have lower rigidity than that of a rigid body configured with the first wall body 21, the third wall body 23, and the connecting wall bodies 24 so as to be bent by the load received from the external wire Weh. In the protrusion housing body 20, when an impact load is applied to the vehicle from the outside and the external wire Weh inputs a load to the second wall body 22, the second wall body 22 bends to absorb the input load and a reduced force transmits from the second wall body 22 to the rigid body configured with the first wall body 21, the third wall body 23, and the connecting wall bodies 24. This allows the protrusion housing body 20 to ease the load received from the external wire Weh caused due to the impact load, so that the protection function of the external wire Weh can be improved.

By the way, the protrusion housing body 20 is desirable to make the space between the inner peripheral face of the first wall body 21 and the outer peripheral face of the third wall body 23 narrower than the tip shape of the protrusion (stud bolt) Pr. Furthermore, the third wall body 23 is desirable to be formed such that an end face 23a on the first opening 21a side is disposed offset toward the second wall body 22 side than the first opening 21a, and the end face 23a on the first opening 21a side is formed as a tapered face sloping from its own outer peripheral face side to inner peripheral face side (FIG. 2 and FIG. 3). Thereby, when inserting the protrusion (stud bolt) Pr from the first opening 21a at the time of assembling the protector 1 to the wall face Bd1 of the dash panel Bd, the protrusion housing body 20 can avoid catching the tip of the protrusion (stud bolt) Pr during the insertion and allows it to be inserted into the inner side. In other words, in the protrusion housing body 20, the space between the inner peripheral face of the first wall body 21 and the outer peripheral face of the third wall body 23 is formed narrower than the tip shape of the protrusion (stud bolt) Pr for making it possible to avoid mis-insertion of the protrusion (stud bolt) Pr therebetween. Furthermore, in the protrusion housing body 20, by disposing the end face 23a of the third wall body 23 on the first opening 21a side on a deeper side than the first opening 21a and forming the end face 23a in a tapered face toward the inner side of the third wall body 23, the end face 23a can be shaped to catch the protrusion (stud bolt) Pr and guide the protrusion (stud bolt) Pr toward the inner side of the third wall body 23. Therefore, the protrusion housing body 20 can improve the workability of assembly when inserting the protrusion (stud bolt) Pr.

Note here that, in the protrusion housing body 20, each of the connecting wall bodies 24 also has a tapered face. In other words, an end face 24a of the connecting wall body 24 on the first opening 21a side is: connected, on the first wall body 21 side, to the end face 21d of the first wall body 21 on the first opening 21a side; connected, on the third wall body 23 side, to the end face 23a of the third wall body 23 on the first opening 21a side; and formed as a tapered face sloping from the first wall body 21 side to the third wall body 23 side (FIG. 2 and FIG. 3). Therefore, in the protrusion housing body 20, the end face 24a of the connecting wall body 24 on the first opening 21a side also functions as a shape to catch the protrusion (stud bolt) Pr, thereby making it possible to further improve the workability of assembly when inserting the protrusion (stud bolt) Pr.

As described above, the protector 1 according to the present embodiment has the protection function of protecting the external wire Weh from the protrusion (stud bolt) Pr caused due to the input of an impact load. Furthermore, the protector 1 can achieve the wire protection function by the protrusion housing body 20 together with the reduction in the body size of the protrusion housing body 20. Moreover, the protector 1 is designed such that the protrusion housing body 20 does not hinder the workability of assembly to the wall face Bd1 of the dash panel Bd.

### Modification Example

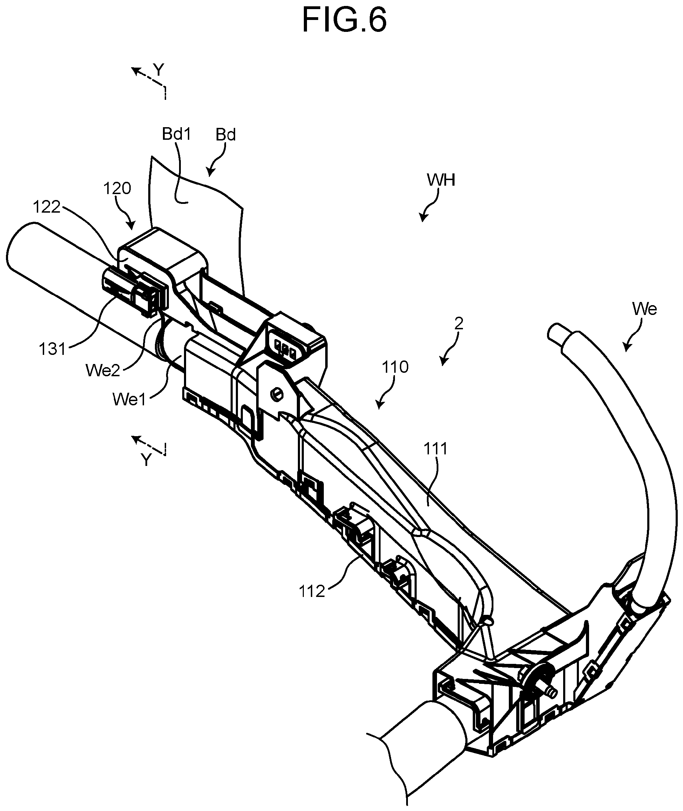

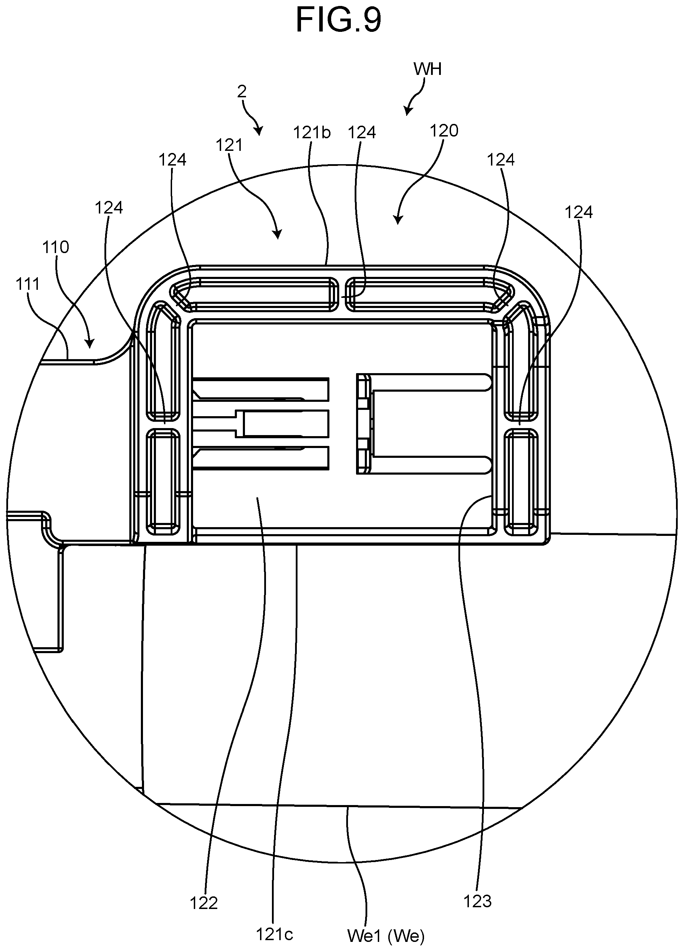

Like the protector 1 according to the embodiment described above, a protector 2 according to a modification example includes: a protector main body 110 in which a protection target part We1 of a protection target wire We is housed; and a protrusion housing body 120 that houses a protrusion (stud bolt) Pr from the wall face of the peripheral component (wall face Bd1 of the dash panel Bd) disposed in the surroundings of the protector main body 110 (FIG. 6, FIG. 7, and FIG. 9).

While different in shape from the protector main body 10 of the embodiment, the protector main body 110 of the modification example, like the protector main body 10, includes a housing member 111 that houses and routes the protection target part We1 inserted from the insertion port, and a cover member 112 that is assembled to the housing member 111 and closes the insertion port thereof (FIG. 6), and protects the protection target part We1 from the peripheral component during normal traveling. The protector main body 110 is, for example, screw-fixed to the wall face Bd1 of the dash panel Bd.

Furthermore, while different in shape from the protrusion housing body 20 of the embodiment, the protrusion housing body 120 of the modification example, like the protrusion housing body 20, prevents the peripheral component (external electric wire Weh) disposed in the surroundings of the protrusion (stud bolt) Pr from interfering with the protrusion Pr when an impact load is applied to the car body.

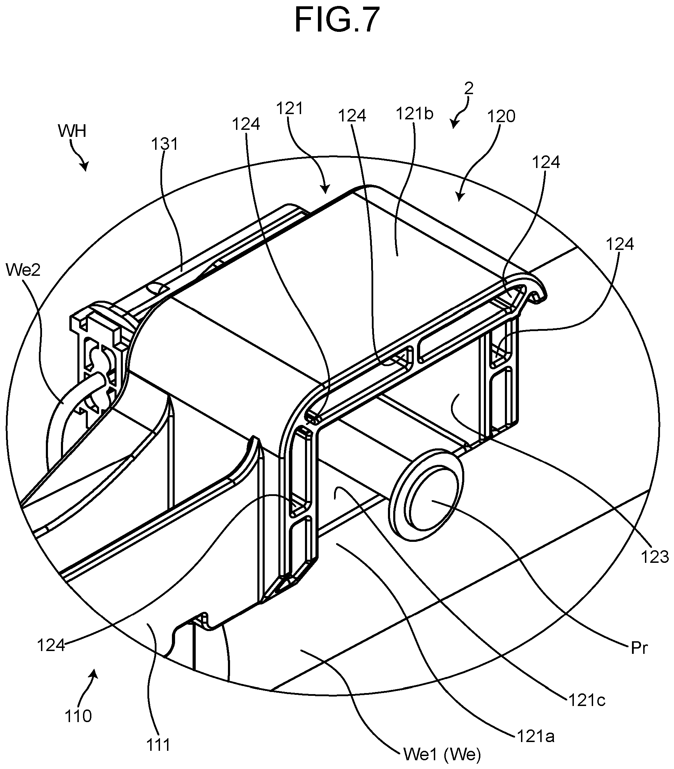

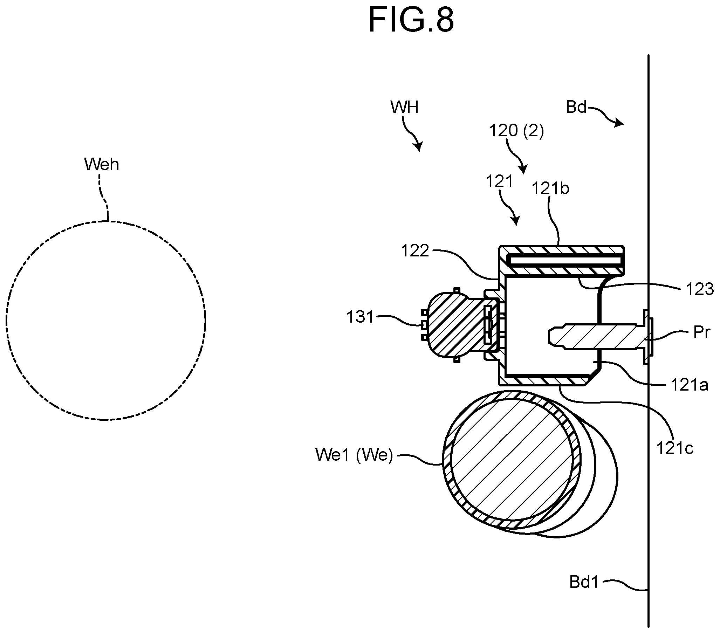

The protrusion housing body 120 of the modification example includes: a cylindrical first wall body 121, in an angular cylindrical shape, that surrounds the protrusion Pr inserted from a first opening 121a at one end; and a second wall body 122, in a rectangular flat-plate shape, that closes a second opening at another end of the first wall body 121 (FIG. 7 and FIG. 8). Like the protrusion housing body 20 of the embodiment, the protrusion housing body 120 is disposed such that the cylinder axis direction of the first wall body 121 is aligned with the front-rear direction of the vehicle (the protruding direction of the protrusion (stud bolt) Pr) and the first opening 121a is facing toward the wall face Bd1 of the dash panel Bd. Furthermore, like the protrusion housing body 20 of the embodiment, the protrusion housing body 120 has the second wall body 122 interposed between the external wire Weh and the tip of the protrusion (stud bolt) Pr.

Furthermore, the protrusion housing body 120 of the modification example includes: a third wall body 123 that is disposed on the inner side of the first wall body 121 with its outer peripheral face opposing, with a space, to the inner peripheral face of the first wall body 121, and houses the protrusion Pr inserted from the first opening 121a of the first wall body 121; and a plurality of connecting wall bodies 124 that are arranged around the axis of the cylinder of the first wall body 121 for connecting the inner peripheral face of the first wall body 121 and the outer peripheral face of the third wall body 123 (FIG. 7 to FIG. 9).

Like the first wall body 21 of the embodiment, the first wall body 121 of the modification example is formed as a cylindrical body that is longer in the direction of the cylinder axis than the maximum protrusion amount of the protrusion (stud bolt) Pr from the wall face of the peripheral component (wall face Bd1 of the dash panel Bd) to prevent the protrusion (stud bolt) Pr from contacting the second wall body 122 (FIG. 8).

Like the second wall body 22 of the embodiment, the second wall body 122 of the modification example is formed to have lower rigidity than that of the rigid body configured with the first wall body 121, the third wall body 123, and the connecting wall bodies 124 so as to be bent by the load received from the external wire Weh. Note that the second wall body 122 does not necessarily have to be a flat-plate shaped wall body, as in the case of the second wall body 22 according to the embodiment.

The third wall body 123 of the modification example is formed as a U-shaped wall body similar to the three wall parts arranged opposing to three of the four flat-plate shaped wall parts of the first wall body 121 with a space provided therebetween, and the two end parts on the opening side of the U shape are connected to the remaining wall part of the first wall body 121 (FIG. 7). Furthermore, the opening of the third wall body 123 on the second wall body 122 side is closed by the second wall body 122.

The connecting wall body 124 of the modification example is formed to extend from the end part of the third wall body 123 on the first opening 121a side to the second wall body 122, and is connected also to the second wall body 122.

Although not illustrated in the drawings, the third wall body 123 may be formed as an angular cylindrical body similar to and coaxial with the first wall body 121. In other words, the protrusion housing body 120 may employ a double-walled structure with the first wall body 121 in an angular cylindrical shape and the third wall body 123 in an angular cylindrical shape.

As described, like the protector 1 of the embodiment, the protector 2 according to the modification example has the protection function of protecting the external wire Weh from the protrusion (stud bolt) Pr caused due to the input of an impact load. Furthermore, like the protector 1 of the embodiment, the protector 2 can achieve the wire protection function by the protrusion housing body 120 together with the reduction in the body size of the protrusion housing body 120.

Note here that the second wall body 122 of the modification example is disposed in a position where the space with respect to the external wire Weh is wider compared to the case of the second wall body 22 of the embodiment. Thus, a connector 131 provided at the terminal of a branch wire We2 from the protection target wire We is attached to the second wall body 122 of the modification example (FIG. 6 to FIG. 8, FIG. 10, and FIG. 11). That connector 131 is, for example, in a size corresponding to the enlarged part of the space between the second wall body 122 and the external wire Weh.

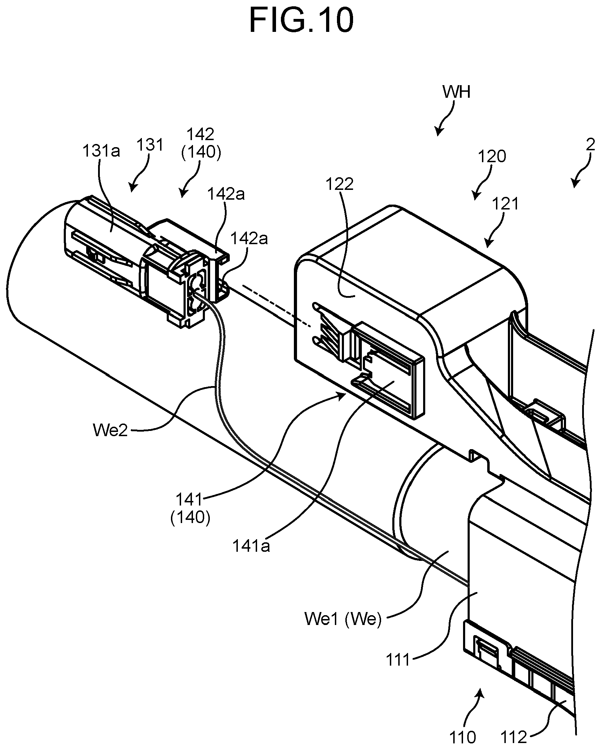

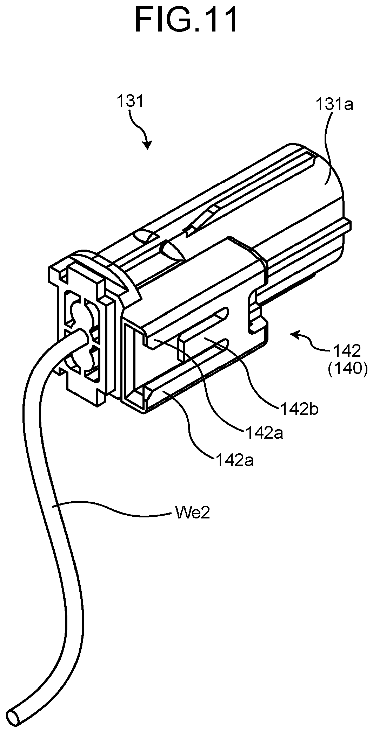

The connector 131 is, by a holding structure 140 provided between the second wall body 122 and itself, assembled to the second wall body 122 and holds the assembled state (FIG. 10 and FIG. 11). The holding structure 140 employs a sliding structure with which the connector 131 is assembled by sliding it along the outer wall face of the second wall body 122. The holding structure 140 includes a first engagement part 141 provided on the second wall body 122, and a second engagement part 142 provided on a resin casing 131a of the connector 131 (FIG. 10 and FIG. 11).

The first engagement part 141 has a flexible piece part 141a in a rectangular flat-plate shape with flexibility (FIG. 10). On the other hand, the second engagement part 142 has a guide rail part 142a that guides the flexible piece part 141a to an assembly completion position while sliding it (FIG. 10 and FIG. 11). For example, the holding structure 140 allows a claw part protruding from the flexible piece part 141a of the first engagement part 141 and a claw part protruding from a flexible piece part 142b (FIG. 11) of the second engagement part 142 to engage each other at the assembly completion position, thereby keeping the assembly state.

In the protrusion housing body 120, when an impact load is applied to the vehicle from the outside and the external wire Weh inputs a load to the second wall body 122 via the connector 131, the second wall body 122 bends to absorb the input load and the reduced force transmits from the second wall body 122 to the rigid body configured with the first wall body 121, the third wall body 123, and the connecting wall bodies 124. This allows this protrusion housing body 120 to ease the load received from the external wire Weh caused due to the impact load, so that the protection function of the external wire Weh can be improved.

As described, the protector 2 of the modification example can also have the connector 131 assembled to the second wall body 122, depending on the size of the space between the second wall body 122 and the external wire Weh.

The protector according to the present embodiment is capable of protecting the external wire from the protrusion by the protrusion housing body provided between the protrusion and the external wire. Therefore, the protector 1 has the protection function of protecting the external wire from the protrusion caused due to the input of an impact load.

## Claims

1. A protector (1, 2) comprising:
a protector main body (10, 110) that is adapted to house a protection target part (We1) of a protection target wire (We); and
a protrusion housing body (20, 120) that is connected to the protector main body (10, 110) and adapted to house a protrusion (Pr) from a wall face (Bd1) of a peripheral component (Bd) disposed in a surrounding of the protector main body (10, 110), wherein
the protrusion housing body (20, 120) includes: a first wall body (21, 121), in a cylindrical shape, that is adapted to surround the protrusion (Pr) which may be inserted from a first opening (21a, 121a) at one end; and a second wall body (22, 122) that closes a second opening at another end of the first wall body (21, 121),
in order to be able to prevent the protrusion (Pr) from contacting the second wall body (22, 122), the first wall body (21, 121) is formed in a cylindrical body that is longer in a cylinder axis direction than a maximum protrusion amount of the protrusion (Pr) from the wall face (Bd1) of the peripheral component (Bd), and
the second wall body (22, 122) is adapted to be interposed between an external wire (Weh) different from the protection target wire and a tip of the protrusion (Pr) disposed opposing to the external wire (Weh),
**characterized in that** the second wall body (22, 122) is formed to have lower rigidity than the first wall body (21, 121) to be bent by a load received from the external wire (Weh).

2. The protector (1, 2) according to claim 1, wherein
the protrusion housing body (20, 120) includes: a third wall body (23, 123) that is disposed in an inner side of the first wall body (21, 121) with an external peripheral face opposing, with a space, to an inner peripheral face of the first wall body (21, 121), the third wall body (23, 123) adapted to surround the protrusion (Pr) inserted from the first opening (21a, 121a) of the first wall body (21, 121); and a plurality of connecting wall bodies (24, 124) arranged around a cylinder axis of the first wall body (21, 121) for connecting the inner peripheral face of the first wall body (21, 121) and the outer peripheral face of the third wall body (23, 123), and
the second wall body (22, 122) is formed to have lower rigidity than a rigidity of a rigid body configured with the first wall body (21, 121), the third wall body (23, 123), and the connecting wall bodies (24, 124) to be able to be bent by a load received from the external wire (Weh).

3. The protector (1) according to claim 1, wherein
the protrusion housing body (20) includes: a third wall body (23) that is disposed in an inner side of the first wall body (21) with an external peripheral face opposing, with a space, to an inner peripheral face of the first wall body (21), the third wall body (23) adapted to surround the protrusion (Pr) inserted from the first opening (21a) of the first wall body (21); and a plurality of connecting wall bodies (24) arranged around a cylinder axis of the first wall body (21) for connecting the inner peripheral face of the first wall body (21) and the outer peripheral face of the third wall body (23),
the second wall body is formed to have lower rigidity than a rigidity of a rigid body configured with the first wall body (21), the third wall body (23), and the connecting wall bodies (24) to be able to be bent by a load received from the external wire (Weh),
the space between the inner peripheral face of the first wall body (21) and the outer peripheral face of the third wall body (23) is formed narrower than a tip shape of the protrusion (Pr), and
the third wall body (23) is formed such that: an end face (23a) on the first opening (21a) side is disposed offset toward the second wall body (22) side than the first opening (21a); and the end face (23a) on the first opening (21a) side is formed in a tapered face sloping from the outer peripheral face side of the third wall body (23) itself toward an inner peripheral face side.

4. The protector (2) according to claim 1, further comprising:
a holding structure (140) that is provided between the second wall body (122) and a connector (131), the holding structure (140) allowing the connector (131) to be assembled to the second wall body (122) and holding an assembly state.

5. The protector (1, 2) according to any one of claims 1 to 4, wherein the load that the second wall body (22, 122) may receive from the external wire (Weh) is generated due to an impact load applied during a crash test of a vehicle.

## Patentansprüche

1. Ein Protektor (1, 2) aufweisend:
einen Protektor-Hauptkörper (10, 110), der zur Aufnahme eines Schutzzielteils (We1) eines Schutzzieldrahtes (We) geeignet ist; und
einen Vorsprung-Gehäusekörper (20, 120), der mit dem Protektor-Hauptkörper (10, 110) verbunden ist und geeignet ist, einen Vorsprung (Pr) von einer Wandfläche (Bd1) einer peripheren Komponente (Bd) aufzunehmen, die in einer Umgebung des Protektor-Hauptkörpers (10, 110) angeordnet ist, wobei
der Vorsprung-Gehäusekörper (20, 120) umfasst: einen ersten Wandkörper (21, 121) in einer zylindrischen Form, der angepasst ist, um den Vorsprung (Pr) zu umgeben, der von einer ersten Öffnung (21a, 121a) an einem Ende eingesetzt werden kann; und einen zweiten Wandkörper (22, 122), der eine zweite Öffnung an einem anderen Ende des ersten Wandkörpers (21, 121) verschließt,
um verhindern zu können, dass der Vorsprung (Pr) den zweiten Wandkörper (22, 122) berührt, der erste Wandkörper (21, 121) in einem zylindrischen Körper ausgebildet ist, der in einer Zylinderachsenrichtung länger ist als ein maximaler Vorsprungsbetrag des Vorsprungs (Pr) von der Wandfläche (Bd1) der Umfangskomponente (Bd), und
der zweite Wandkörper (22, 122) so angepasst ist, dass er zwischen einem externen Draht (Weh), der sich von dem Schutz-Zieldraht unterscheidet, und einer Spitze des Vorsprungs (Pr), die gegenüber dem externen Draht (Weh) angeordnet ist, eingefügt wird,
**dadurch gekennzeichnet, dass** der zweite Wandkörper (22, 122) so ausgebildet ist, dass er eine geringere Steifigkeit als der erste Wandkörper (21, 121) aufweist, um durch eine von dem externen Draht (Weh) aufgenommene Last gebogen zu werden.

2. Der Protektor (1, 2) nach Anspruch 1, wobei
der Vorsprung-Gehäusekörper (20, 120) umfasst: einen dritten Wandkörper (23, 123), der an einer Innenseite des ersten Wandkörpers (21, 121) mit einer äußeren Umfangsfläche angeordnet ist, die mit einem Abstand einer inneren Umfangsfläche des ersten Wandkörpers (21, 121) gegenüberliegt, wobei der dritte Wandkörper (23, 123) geeignet ist, den von der ersten Öffnung (21a, 121a) des ersten Wandkörpers (21, 121) eingesetzten Vorsprung (Pr) zu umgeben; und eine Vielzahl von Verbindungswandkörpern (24, 124), die um eine Zylinderachse des ersten Wandkörpers (21, 121) angeordnet sind, um die innere Umfangsfläche des ersten Wandkörpers (21, 121) und die äußere Umfangsfläche des dritten Wandkörpers (23, 123) zu verbinden, und
der zweite Wandkörper (22, 122) so ausgebildet ist, dass er eine geringere Steifigkeit aufweist als eine Steifigkeit eines starren Körpers, der mit dem ersten Wandkörper (21, 121), dem dritten Wandkörper (23, 123) und den Verbindungswandkörper (24, 124) so konfiguriert ist, dass er durch eine von dem externen Draht (Weh) aufgenommene Last gebogen werden kann.

3. Der Protektor (1) nach Anspruch 1, wobei
der Vorsprung-Gehäusekörper (20) umfasst: einen dritten Wandkörper (23), der in einer Innenseite des ersten Wandkörpers (21) angeordnet ist, wobei eine äußere Umfangsfläche mit einem Zwischenraum einer inneren Umfangsfläche des ersten Wandkörpers (21) gegenüberliegt, wobei der dritte Wandkörper (23) dazu geeignet ist, den von der ersten Öffnung (21a) des ersten Wandkörpers (21) eingesetzten Vorsprung (Pr) zu umgeben; und eine Vielzahl von Verbindungswandkörpern (24), die um eine Zylinderachse des ersten Wandkörpers (21) angeordnet sind, um die innere Umfangsfläche des ersten Wandkörpers (21) und die äußere Umfangsfläche des dritten Wandkörpers (23) zu verbinden,
der zweite Wandkörper so ausgebildet ist, dass er eine geringere Steifigkeit aufweist als eine Steifigkeit eines starren Körpers, der mit dem ersten Wandkörper (21), dem dritten Wandkörper (23) und den Verbindungswandkörpern (24) konfiguriert ist, um durch eine von dem externen Draht (Weh) aufgenommene Last gebogen werden zu können,
der Raum zwischen der inneren Umfangsfläche des ersten Wandkörpers (21) und der äußeren Umfangsfläche des dritten Wandkörpers (23) schmaler ausgebildet ist als eine Spitzenform des Vorsprungs (Pr), und
der dritte Wandkörper (23) so ausgebildet ist, dass: eine Endfläche (23a) auf der Seite der ersten Öffnung (21a) zur Seite des zweiten Wandkörpers (22) hin versetzt angeordnet ist als die erste Öffnung (21a); und die Endfläche (23a) auf der Seite der ersten Öffnung (21a) in einer sich verjüngenden Fläche ausgebildet ist, die von der Seite der äußeren Umfangsfläche des dritten Wandkörpers (23) selbst zu einer Seite der inneren Umfangsfläche hin abfällt.

4. Der Protektor (2) nach Anspruch 1, ferner aufweisend
eine Haltestruktur (140), die zwischen dem zweiten Wandkörper (122) und einem Verbinder (131) vorgesehen ist, wobei die Haltestruktur (140) die Montage des Verbinders (131) an dem zweiten Wandkörper (122) ermöglicht und einen Montagezustand aufrechterhält.

5. Der Protektor (1, 2) nach einem der Ansprüche 1 bis 4, wobei die Belastung, die der zweite Wandkörper (22, 122) von dem externen Draht (Weh) erhalten kann, aufgrund einer Aufprallbelastung erzeugt wird, die während eines Crashtests eines Fahrzeugs aufgebracht wird.

## Revendications

1. Protecteur (1, 2), comprenant :
un corps principal de protecteur (10, 110) qui est adapté pour loger une partie cible de protection (We1) d'un fil cible de protection (We) ; et
un corps de logement de protubérance (20, 120) qui est connecté au corps principal de protecteur (10, 110) et adapté pour loger une protubérance (Pr) d'une face de paroi (Bd1) d'un composant périphérique (Bd) disposé à l'entour du corps principal de protecteur (10, 110), dans lequel
le corps de logement de protubérance (20, 120) inclut : un premier corps de paroi (21, 121) de forme cylindrique, adapté pour entourer la protubérance (Pr) qui peut être insérée à partir d'une première ouverture (21a, 121a) à une extrémité ; et un deuxième corps de paroi (22, 122) qui ferme une deuxième ouverture à une autre extrémité du premier corps de paroi (21, 121),
afin de pouvoir empêcher que la protubérance (Pr) entre en contact avec le deuxième corps de paroi (22, 122), le premier corps de paroi (21, 121) est formé dans un corps cylindrique qui est plus long en direction de l'axe cylindrique qu'une quantité de protubérance maximale de la protubérance (Pr) à partir de la face de paroi (Bd1) du composant périphérique (Bd), et
le deuxième corps de paroi (22, 122) est adapté pour être interposé entre un fil externe (Weh) différent du fil cible de protection et une pointe de la protubérance (Pr) disposée à l'opposé du fil externe (Weh),
**caractérisé en ce que** le deuxième corps de paroi (22, 122) est formé pour présenter une rigidité inférieure à celle du premier corps de paroi (21, 121) pour pouvoir être plié par une charge reçue du fil externe (Weh).

2. Protecteur (1, 2) selon la revendication 1, dans lequel
le corps de logement de protubérance (20, 120) inclut : un troisième corps de paroi (23, 123) disposé sur un côté interne du premier corps de paroi (21, 121) présentant une face périphérique externe opposée, avec un espace, à une face périphérique interne du premier corps de paroi (21, 121), le troisième corps de paroi (23, 123) étant adapté pour entourer la protubérance (Pr) insérée depuis la première ouverture (21a, 121a) du premier corps de paroi (21, 121) ; et une pluralité de corps de paroi de connexion (24, 124) agencés autour d'un axe cylindrique du premier corps de paroi (21, 121) pour connecter la face périphérique interne du premier corps de paroi (21, 121) et la face périphérique externe du troisième corps de paroi (23, 123), et
le deuxième corps de paroi (22, 122) est formé pour présenter une rigidité inférieure à celle d'un corps rigide configuré avec le premier corps de paroi (21, 121), le troisième corps de paroi (23, 123) et les corps de paroi de connexion (24, 124) pour pouvoir être plié par une charge reçue du fil externe (Weh).

3. Protecteur (1) selon la revendication 1, dans lequel
le corps de logement de protubérance (20) inclut : un troisième corps de paroi (23) disposé sur un côté interne du premier corps de paroi (21) présentant une face périphérique externe opposée, avec un espace, à une face périphérique interne du premier corps de paroi (21), le troisième corps de paroi (23) étant adapté pour entourer la protubérance (Pr) insérée depuis la première ouverture (21a) du premier corps de paroi (21) ; et une pluralité de corps de paroi de connexion (24) agencés autour d'un axe cylindrique du premier corps de paroi (21) pour connecter la face périphérique interne du premier corps de paroi (21) et la face périphérique externe du troisième corps de paroi (23),
le deuxième corps de paroi est formé pour présenter une rigidité inférieure à celle d'un corps rigide configuré avec le premier corps de paroi (21), le troisième corps de paroi (23) et les corps de paroi de connexion (24) pour pouvoir être plié par une charge reçue du fil externe (Weh),
l'espace entre la face périphérique interne du premier corps de paroi (21) et la face périphérique externe du troisième corps de paroi (23) est formé de manière à être plus étroit qu'une forme de pointe de la protubérance (Pr), et
le troisième corps de paroi (23) est formé de telle sorte que : une face d'extrémité (23a) sur le côté de la première ouverture (21a) est disposée avec un décalage vers le côté du deuxième corps de paroi (22) par rapport à la première ouverture (21a) ; et la face d'extrémité (23a) sur le côté de la première ouverture (21a) est formée dans une face conique inclinée depuis le côté de la face périphérique externe du troisième corps de paroi lui-même (23) vers un côté de la face périphérique interne.

4. Protecteur (2) selon la revendication 1, comprenant en outre :
une structure de maintien (140) qui est pourvue entre le deuxième corps de paroi (122) et un connecteur (131), la structure de maintien (140) permettant au connecteur (131) d'être assemblé au deuxième corps de paroi (122) et maintenant un état d'assemblage.

5. Protecteur (1, 2) selon l'une quelconque des revendications 1 à 4, dans lequel la charge que le deuxième corps de paroi (22, 122) peut recevoir du fil externe (Weh) est générée en raison d'une charge d'impact appliquée durant un test de collision d'un véhicule.
